# EUROPEAN PATENT SPECIFICATION

(11) **EP 4 421 964 B1**
(45) Date of publication and mention of the grant of the patent: **18.03.2026**
(21) Application number: 23883081.4
(22) Date of filing: 25.10.2023
(51) Int. Cl.: H01M 50/505, H01M 50/375, H01M 50/503, H01M 50/522, H01M 50/524, H01M 50/526, H01M 50/204, H01M 50/507, H01M 10/658, H01M 50/358, H01R 25/16, H02G 5/00

(54) **INTERMODULE BUS BAR CAPABLE OF DELAYING THERMAL RUNAWAY TRANSITION, AND BATTERY PACK COMPRISING SAME**
BUSSCHIENE ZWISCHEN MODULEN ZUR VERZÖGERUNG DES ÜBERGANGS VON THERMISCHEM DURCHGEHEN UND BATTERIEPACK DAMIT
BARRE OMNIBUS INTERMODULE CAPABLE DE RETARDER LA TRANSITION D'EMBALLEMENT THERMIQUE, ET BLOC-BATTERIE LA COMPRENANT

(30) Priority: 26.10.2022 KR 20220139104
(43) Date of publication of application: 28.08.2024
(73) Proprietor: LG Energy Solution, Ltd., Seoul 07335 (KR)
(72) Inventor: LEE, Won Tae, Daejeon 34122 (KR); YUN, Sun Woo, Daejeon 34122 (KR); HWANG, Sung Tack, Daejeon 34122 (KR)
(74) Representative: Goddar, Heinz J.
(86) International application number: PCT/KR2023/016612
(87) International publication number: WO 2024/090976

(56) References cited:
- EP-A1- 4 178 024
- EP-A2- 4 213 293
- WO-A1-2022/059894
- CN-A- 114 696 043
- CN-A- 114 696 043
- KR-A- 20200 116 880
- KR-A- 20210 050 983
- KR-B1- 102 452 406
- US-A1- 2020 169 069
- US-A1- 2020 280 153
- US-A1- 2022 209 365

## Description

### [Technical Field]

This application claims the benefit of priority to Korean Patent Application No. 2022-0139104 filed on October 26, 2022.

The present invention relates to an inter-module busbar capable of delaying thermal runaway propagation and a battery pack including the same, and more particularly to an inter-module busbar capable of delaying thermal runaway propagation configured to inhibit explosion caused by high pressure and high temperature due to propagation of fire and venting gas from a battery cell received in a battery pack due to thermal runaway and a battery pack including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, fire and venting gas may occur in a battery cell received in a battery module due to external impact, short circuit, overcurrent, etc., and such fire and venting gas may occur instantaneously, whereby damage such as explosion due to high temperature and high pressure may occur.

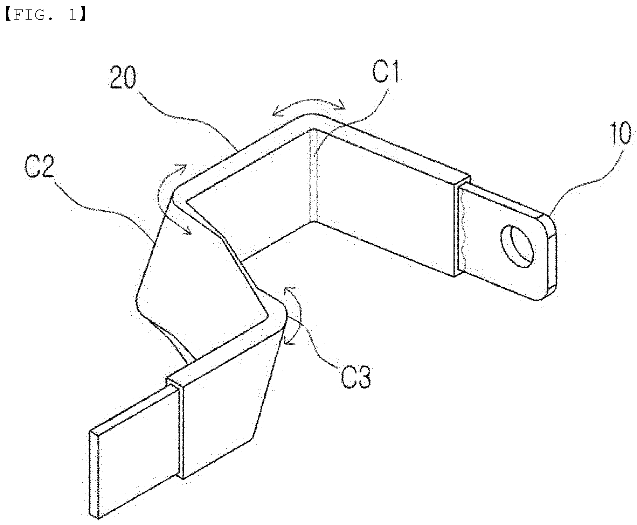

FIG. 1 is a perspective view showing a conventional flexible busbar assembly. As shown in FIG. 1, the conventional flexible busbar assembly includes a busbar 10 configured to electrically connect adjacent battery modules to each other and a cover member 20 configured to wrap the busbar 10.

A specific part of the conventional flexible busbar assembly may be deformed, such as by bending, into a desired shape to easily electrically connect battery modules located on a complex path to each other.

When fire and venting gas occur in a battery cell in a battery module due to thermal runaway, however, no means configured to relieve pressure rise due to the venting gas is provided, whereby explosion due to high pressure may occur.

In addition, the cover member 20 may melt due to high temperature, and fire and venting gas may move to all neighboring battery modules through a gap formed by melting, resulting in thermal runaway propagation, which may cause further damage.

### (Prior Art Document)

(Patent Document 1) Korean Patent Application Publication No. 2015-0101154
The prior art relevant to the present invention is given by WO 2022/059894 A1, US 2020/280153 A1, EP 4 213 293 A2 and CN 114 696 043 A. It is known from the prior art a busbar that is a bar-type conductor for electrically connecting battery modules or electronic components to each other. The busbar has a three-dimensional lattice structure in which a plurality of vents are provided in the body, so as to allow air ventilation. The busbar may be provided in the form of a bar, the body of which has a predetermined length, a predetermined width, and a predetermined thickness, and the plurality of vents may be disposed at the top, bottom, left, right, front, and rear surfaces of the body, and provided to communicate with each other through the inner portion of the body.

### [Disclosure]

### [Technical Problem]

The present invention has been made in view of the above problems, and it is an object of the present invention to provide an inter-module busbar capable of delaying thermal runaway propagation configured to guide the movement of venting gas generated by fire in a battery cell to a nearby space, thereby delaying and inhibiting explosion due to high pressure, and a battery pack including the same.

It is another object of the present invention to provide an inter-module busbar capable of delaying thermal runaway propagation configured such that a cover member does not melt at high temperatures, thereby inhibiting propagation of fire and thermal runaway to the entire interior of a battery pack as the result of the cover member melting at high temperatures due to thermal runaway, and a battery pack including the same.

### [Technical Solution]

The present invention is defined according to the subject matter of the appended independent claim. Particular embodiments are given by the additional features of the appended dependent claims. In order to accomplish the above objects, an inter-module busbar according to the present invention includes a metal plate (100) for electrical connection and a cover member (200) configured to partially encompass the metal plate (100), wherein the metal plate (100) has at least one first through-hole (110) formed therein in a longitudinal direction, and a first closure member (300) is configured to be inserted into the first through-hole (110) of the metal plate (100).

Also, in the inter-module busbar according to the present invention, the first closure member (300) may include a thermoplastic material.

Also, in the inter-module busbar according to the present invention, the thermoplastic material may include at least one selected from the group consisting of silicone, polyethylene, polypropylene, polystyrene, and polyvinyl chloride.

Also, in the inter-module busbar according to the present invention, the cover member (200) may include a second through-hole (210), the metal plate (100) configured to be inserted into the second through-hole (210) in the longitudinal direction, and at least one third through-hole (220) spaced apart from the second through-hole (210), and a second closure member (400) being configured to be inserted into the third through-hole (220).

Also, in the inter-module busbar according to the present invention, the second closure member (400) may include a thermoplastic material.

Also, in the inter-module busbar according to the present invention, the thermoplastic material may include at least one selected from the group consisting of silicone, polyethylene, polypropylene, polystyrene, and polyvinyl chloride.

Also, in the inter-module busbar according to the present invention, the metal plate (100) may include an upper metal plate (120) and a lower metal plate (130) cut in a horizontal direction.

Also, in the inter-module busbar according to the present invention, the length of the first closure member (300) may be less than half the length of the first through-hole (110).

Also, in the inter-module busbar according to the present invention, the first closure member (300) may be configured to be inserted into the first through-hole (110) in two or more.

Also, in the inter-module busbar according to the present invention, the cover member (200) may include at least one selected from the group consisting of highly heat-resistant silicone, polyphenylene sulfide, polyetheretherketone, polyphthalamide, polyamide, polysulfone, polyethersulfone, polyetherimide, acrylic fiber, and polybenzimidazole.

In addition, the present invention provides a battery pack including the inter-module busbar having the aforementioned features.

### [Advantageous Effects]

As is apparent from the above description, an inter-module busbar according to the present invention has an advantage in that, when fire and venting gas occur in a battery cell, a closure member melts and a through-hole is opened to guide the movement of the venting gas, whereby it is possible to inhibit explosion caused by thermal runaway propagation and high pressure.

In addition, the inter-module busbar according to the present invention has an advantage in that a cover member does not melt at high temperatures, whereby it is possible to inhibit thermal runaway from spreading throughout the interior of a battery pack due to fire and venting gas leakage.

### [Description of Drawings]

FIG. 1 is a perspective view showing a conventional flexible busbar assembly.
FIG. 2 is a perspective view showing an inter-module busbar according to a first preferred embodiment of the present invention.
FIG. 3 is an exploded perspective view showing the inter-module busbar according to the first preferred embodiment of the present invention.
FIG. 4 is a plan view of the inter-module busbar shown in FIG. 2 when viewed from the front.
FIG. 5 is an exploded perspective view showing an inter-module busbar according to a second preferred embodiment of the present invention.
FIG. 6 is a plan view of the inter-module busbar shown in FIG. 5 when viewed from the front.
FIG. 7 is an exploded perspective view showing an inter-module busbar according to a third preferred embodiment of the present invention.
FIG. 8 is a plan view of the inter-module busbar shown in FIG. 7 when viewed from the front.
FIG. 9 is an exploded perspective view showing an inter-module busbar according to a fourth preferred embodiment of the present invention.
FIG. 10 is a plan view of the inter-module busbar shown in FIG. 9 when viewed from the front.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an inter-module busbar capable of delaying thermal runaway propagation according to the present invention and a battery pack including the same will be described with reference to the accompanying drawings.

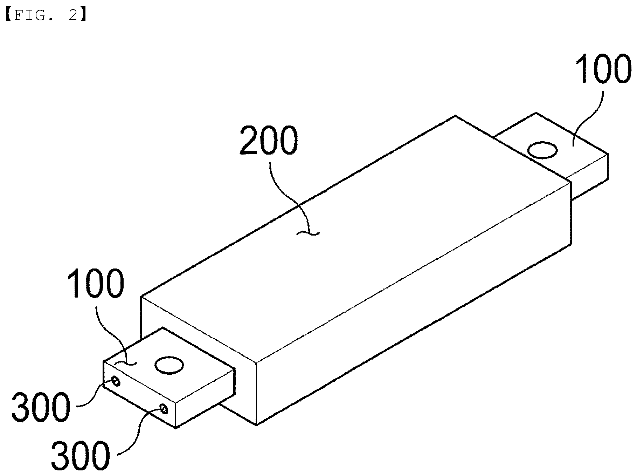

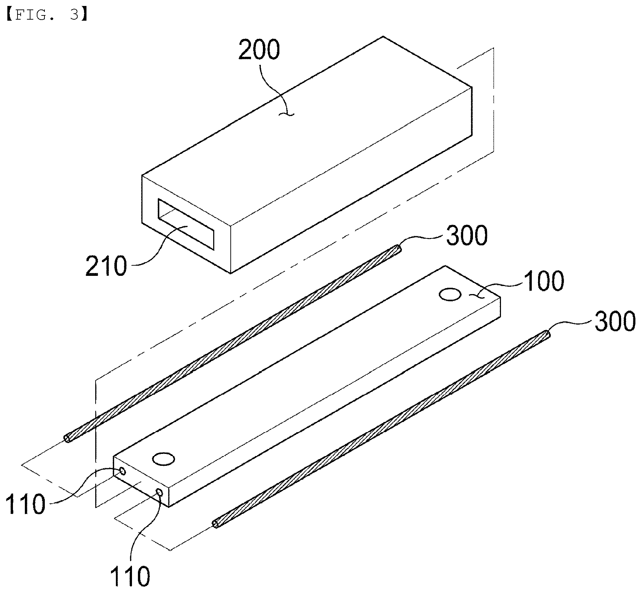

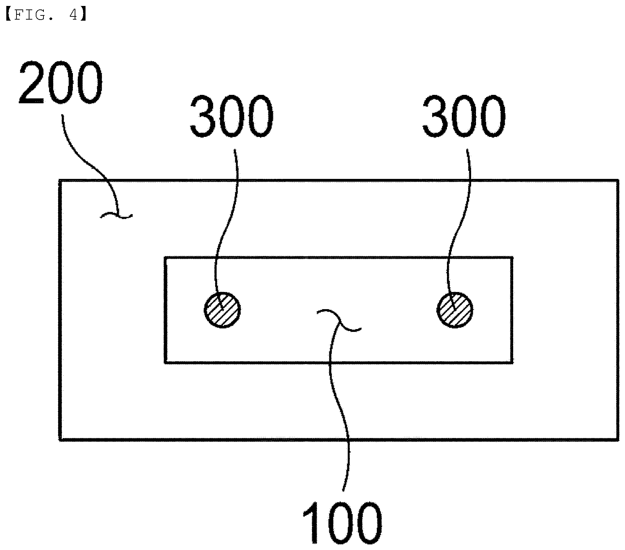

FIG. 2 is a perspective view showing an inter-module busbar according to a first preferred embodiment of the present invention, FIG. 3 is an exploded perspective view showing the inter-module busbar according to the first preferred embodiment of the present invention, and FIG. 4 is a plan view of the inter-module busbar shown in FIG. 2 when viewed from the front.

As shown in FIGs. 2 to 4, the inter-module busbar according to the present invention may include a metal plate 100, a cover member 200, and a first closure member 300.

Opposite ends of the metal plate 100 may be exposed to the outside of the cover member 200, and the exposed ends may serve to electrically connect battery modules disposed in a battery pack to each other.

Consequently, it is possible to set the length of the metal plate 100 in consideration of the distance between the battery modules to be connected and to set the width and thickness of the metal plate in consideration of the amount of current that passes through the metal plate and the resistance of the metal plate.

In addition, the metal plate 100 may be bent at a specific part to have different shapes as needed in consideration of the positions of connectors of the battery modules.

The metal plate 100 may have at least one first through-hole 110 spaced apart from an edge of the metal plate 100 and formed therethrough in a longitudinal direction.

The first through-hole 110 may guide the movement of venting gas caused by fire and thermal runaway in a battery cell, whereby it is possible to prevent explosion of the battery cell due to high pressure caused by instantaneous generation of a large amount of venting gas.

More specifically, as an example, a battery pack may have a plurality of receiving spaces defined by a partition wall, a battery module may be received in each receiving space, and adjacent ones of the battery modules received in the receiving spaces may be electrically connected to each other via an inter-module busbar extending through the partition wall.

At this time, venting gas is generated in a battery cell received in a specific one of the plurality of battery modules due to overcurrent and thermal runaway, whereby the pressure in the space in which the battery module is received may increase.

When the first closure member 300 disposed in the first through-hole 110 by insertion melts due to high temperature caused by the venting gas or is separated from the first through-hole due to pressure caused by the venting gas, whereby the first through-hole 110 is opened, the venting gas may move to an adjacent receiving space along the first through-hole 110, whereby pressure rise in the receiving space in which the venting gas has been generated may be relieved, and therefore it is possible to prevent explosion due to high pressure.

The cover member 200 is configured to partially encompass the metal plate 100 excluding opposite ends in order to maintain an insulated state of the encompassed part of the metal plate 100, and may be made of an insulative material.

In addition, the cover member 200 may be made of a material that does not melt at high temperatures, such as fire and venting gas resulting from thermal runaway. As an example, the cover member 200 may include at least one selected from the group consisting of highly heat-resistant silicone, polyphenylene sulfide, polyetheretherketone, polyphthalamide, polyamide, polysulfone, polyethersulfone, polyetherimide, acrylic fiber, and polybenzimidazole.

Here, the highly heat-resistant silicone exhibits the same performance as commonly used silicone at room temperature, but at high temperatures, the structure of the highly heat-resistant silicone is changed to a ceramized structure, whereby the highly heat-resistant silicone has ceramic properties, and therefore the highly heat-resistant silicone may exhibit impact resistance while maintaining certain strength.

At high temperatures, therefore, the cover member 200 may be maintained in shape without being damaged or broken, whereby it is possible to maintain an insulated state of the metal plate 100, and therefore it is possible to prevent the occurrence of short circuit due to contact between a nearby metal material and the metal plate 100.

The cover member 200 may have a second through-hole 210 formed through a central part thereof in a longitudinal direction, and the metal plate 100 may be inserted into and located in the second through-hole 210.

At this time, the metal plate 100 may be located such that opposite ends thereof are exposed out of the cover member 200.

The first closure member 300 may be formed in the shape of an elongated rod, may be inserted into, and located in the first through-hole 110 of the metal plate 100, and may be made of a thermoplastic material.

The first closure member 300 may be formed in the same shape as the first through-hole 110.

As an example, the thermoplastic material, of which the first closure member 300 is made, may include at least one selected from the group consisting of silicone, polyethylene, polypropylene, polystyrene, and polyvinyl chloride.

In a normal state, therefore, the first closure member 300 blocks the first through-hole 110 to prevent the movement of air to a space in which a neighboring battery module is located through the first through-hole 110, and when the first closure member melts due to high-temperature fire and venting gas, the venting gas moves through the first through-hole 110.

At this time, the first closure member 300 is maintained in shape when conditions, such as high temperature and high pressure, are not satisfied, and therefore it is possible to inhibit the movement more than necessary of fire and venting gas into a space in which a neighboring battery module is located.

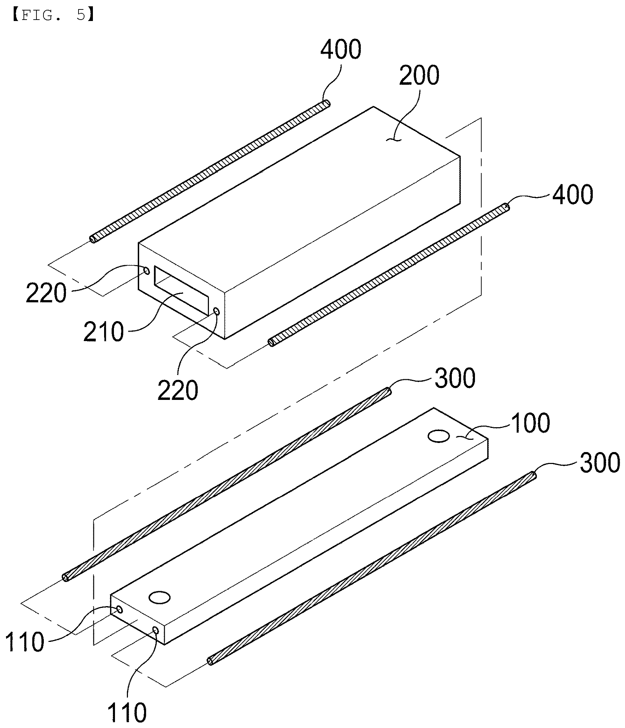

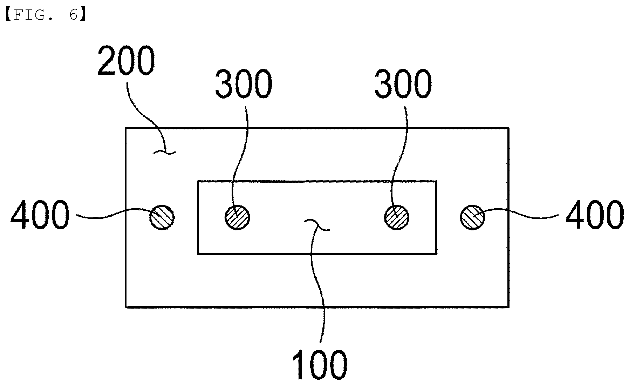

FIG. 5 is an exploded perspective view showing an inter-module busbar according to a second preferred embodiment of the present invention, and FIG. 6 is a plan view of the inter-module busbar shown in FIG. 5 when viewed from the front.

Referring to FIGs. 5 and 6, the inter-module busbar according to the second preferred embodiment of the present invention is identical to the inter-module busbar according to the first embodiment described with reference to FIGs. 2 to 4 except for the shape of a cover member 200 and further provision of a second closure member 400, and therefore a description of the same configuration will be omitted.

In the inter-module busbar according to the second embodiment of the present invention, the cover member 200 may have a third through-hole 220 spaced apart from a second through-hole 210, through which a metal plate 100 is inserted, by a predetermined distance, the third through-hole being formed through the cover member 200 in the longitudinal direction.

When venting gas is generated in a battery cell due to thermal runaway, the third through-hole 220 may guide the movement of the venting gas, whereby it is possible to relieve pressure caused by the venting gas.

A second closure member 400 formed in the shape of an elongated rod may be inserted into and located in the third through-hole 220.

The second closure member 400 may be made of a thermoplastic material, and as an example, the thermoplastic material may include at least one selected from the group consisting of silicone, polyethylene, polypropylene, polystyrene, and polyvinyl chloride.

In a normal state, therefore, the second closure member 400 blocks the third through-hole 220 to prevent the movement of air to a space in which a neighboring battery module is located through the third through-hole 220, and when the second closure member melts due to high-temperature fire and venting gas, the venting gas moves through the third through-hole 220.

That is, the venting gas may move due to destruction by fire of the second closure member 400, whereby pressure rise due to the venting gas may be relieved, and therefore it is possible to inhibit explosion due to high pressure.

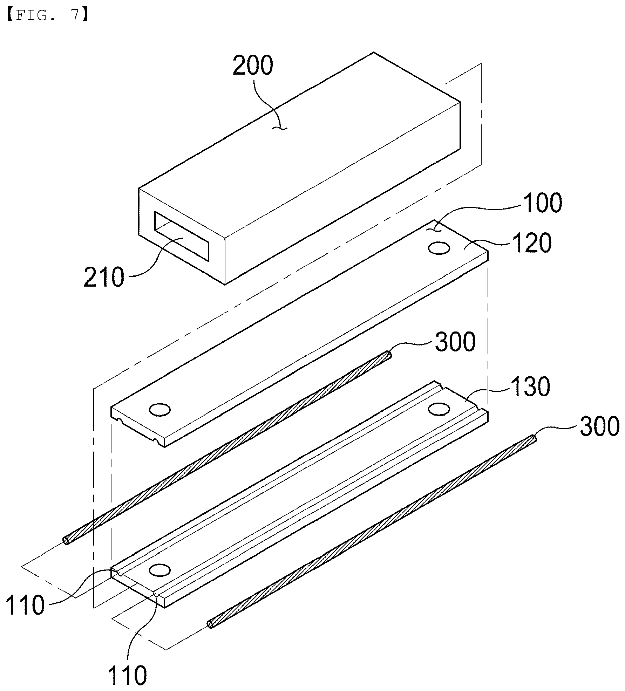

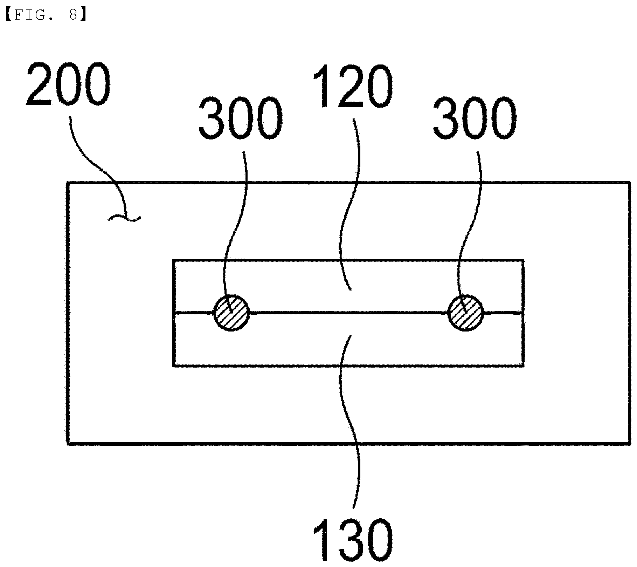

FIG. 7 is an exploded perspective view showing an inter-module busbar according to a third preferred embodiment of the present invention, and FIG. 8 is a plan view of the inter-module busbar shown in FIG. 7 when viewed from the front.

Referring to FIGs. 7 and 8, the inter-module busbar according to the third preferred embodiment of the present invention is identical to the inter-module busbar according to the first embodiment described with reference to FIGs. 2 to 4 except for the shape of a metal plate 100, and therefore a description of the same configuration will be omitted.

The metal plate 100 according to the third embodiment of the present invention may include an upper metal plate 120 and a lower metal plate 130 cut in a horizontal direction.

Since the metal plate 100 is constituted by the upper metal plate 120 and the lower metal plate 130, it is possible to easily locate a first closure member 300 in a first through-hole 110 of the metal plate 100, whereby manufacturing efficiency is improved.

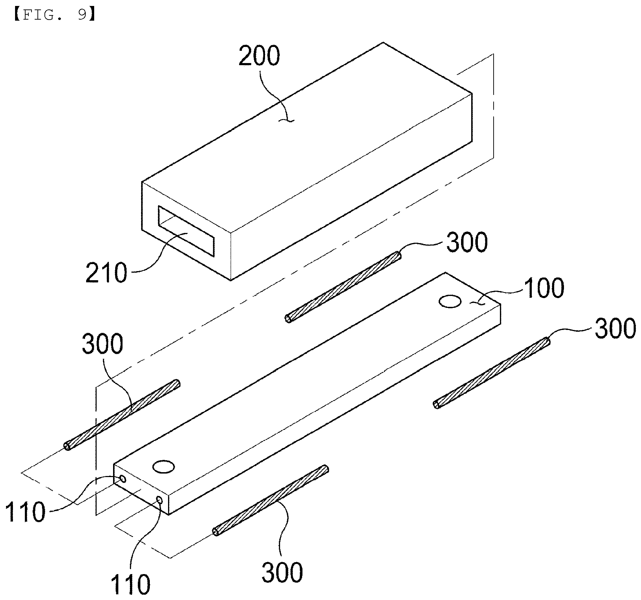

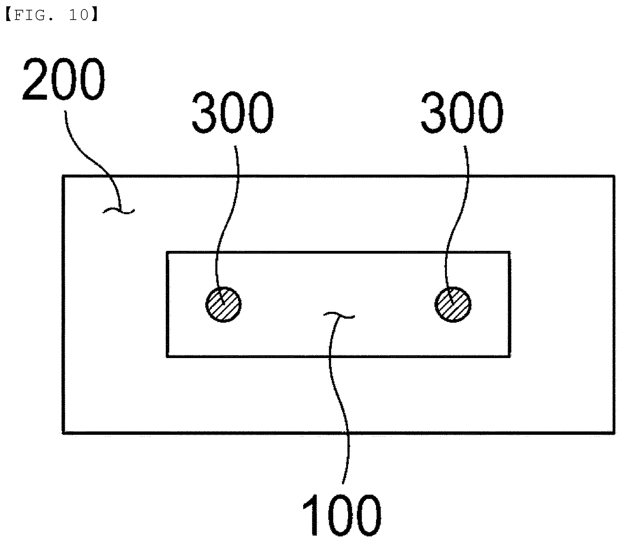

FIG. 9 is an exploded perspective view showing an inter-module busbar according to a fourth preferred embodiment of the present invention, and FIG. 10 is a plan view of the inter-module busbar shown in FIG. 9 when viewed from the front.

Referring to FIGs. 9 and 10, the inter-module busbar according to the fourth preferred embodiment of the present invention is identical to the inter-module busbar according to the first embodiment described with reference to FIGs. 2 to 4 except for the shape of a first closure member 300, and therefore a description of the same configuration will be omitted.

The length of the first closure member 300 according to the fourth embodiment of the present invention may be formed so as to be less than half the length of a first through-hole 110.

Two or more first closure members 300 may be inserted into one first through-hole 110.

A part of the first through-hole 110 may not be filled with the first closure member 300, whereby it is possible to reduce manufacturing costs, and the first closure member 300 may be pushed by high pressure and may be discharged from the first through-hole 110 to guide the movement of venting gas, whereby it is possible to further improve pressure regulation performance against high pressure.

In addition, the second closure member 400 according to the second embodiment shown in FIGs. 6 and 7 may be formed so as to be less than half the length of the third through-hole 220, like the first closure member 300, whereby a plurality of second closure members 400 may be inserted into and located in a single third through-hole 220.

In addition, the present invention may provide a battery pack including the inter-module busbar and a device having the battery pack mounted therein.

Those skilled in the art to which the present invention pertains will appreciate that various applications and modifications based on the above description are possible within the scope of the present invention as defined in the appended claims.

### (Description of Reference Numerals)

- 100:: Metal plate
- 110:: First through-hole
- 120:: Upper metal plate
- 130:: Lower metal plate
- 200:: Cover member
- 210:: Second through-hole
- 220:: Third through-hole
- 300:: First closure member
- 400:: Second closure member

## Claims

1. An inter-module busbar comprising:
a metal plate (100) for electrical connection; and
a cover member (200) configured to partially encompass the metal plate (100),
wherein the metal plate (100) has at least one first through-hole (110) formed therein in a longitudinal direction, and
wherein a first closure member (300) is configured to be inserted into the first through-hole (110) of the metal plate (100).

2. The inter-module busbar according to claim 1, wherein the first closure member (300) includes a thermoplastic material.

3. The inter-module busbar according to claim 2, wherein the thermoplastic material comprises at least one selected from a group consisting of silicone, polyethylene, polypropylene, polystyrene, and polyvinyl chloride.

4. The inter-module busbar according to claim 1, wherein the cover member (200) includes a second through-hole (210), the metal plate (100) configured to be inserted into the second through-hole (210) in the longitudinal direction, and at least one third through-hole (220) spaced apart from the second through-hole (210), and a second closure member (400) being configured to be inserted into the third through-hole (220).

5. The inter-module busbar according to claim 4, wherein the second closure member (400) includes a thermoplastic material.

6. The inter-module busbar according to claim 5, wherein the thermoplastic material comprises at least one selected from a group consisting of silicone, polyethylene, polypropylene, polystyrene, and polyvinyl chloride.

7. The inter-module busbar according to claim 1, wherein the metal plate (100) includes an upper metal plate (100) and a lower metal plate (100) cut in a horizontal direction.

8. The inter-module busbar according to claim 1, wherein a length of the first closure member (300) is less than half a length of the first through-hole (110).

9. The inter-module busbar according to claim 8, wherein the first closure member (300) is configured to be inserted into the first through-hole (110) in two or more.

10. The inter-module busbar according to claim 1, wherein the cover member (200) comprises at least one selected from a group consisting of highly heat-resistant siliconepolyphenylene sulfide, polyetheretherketone, polyphthalamide, polyamide, polysulfone, polyethersulfone, polyetherimide, acrylic fiber, and polybenzimidazole.

11. A battery pack comprising the inter-module busbar according to any one of claims 1 to 10.

## Patentansprüche

1. Zwischenmodul-Sammelschiene, aufweisend:
eine Metallplatte (100) zur elektrischen Verbindung; und
ein Abdeckelement (200), das konfiguriert ist, die Metallplatte (100) teilweise zu umgeben,
wobei die Metallplatte (100) mindestens ein erstes Durchgangsloch (110) aufweist, das in einer Längsrichtung darin ausgebildet ist, und
wobei ein erstes Verschlusselement (300) konfiguriert ist, in das erste Durchgangsloch (110) der Metallplatte (100) eingesetzt zu werden.

2. Zwischenmodul-Sammelschiene nach Anspruch 1, wobei das erste Verschlusselement (300) ein thermoplastisches Material aufweist.

3. Zwischenmodul-Sammelschiene nach Anspruch 2, wobei das thermoplastische Material mindestens eines aufweist, das aus einer Gruppe ausgewählt ist, die aus Silikon, Polyethylen, Polypropylen, Polystyrol und Polyvinylchlorid besteht.

4. Zwischenmodul-Sammelschiene nach Anspruch 1, wobei das Abdeckelement (200) ein zweites Durchgangsloch (210), die Metallplatte (100), die konfiguriert ist, in das zweite Durchgangsloch (210) in der Längsrichtung eingesetzt zu werden, und mindestens ein drittes Durchgangsloch (220), das von dem zweiten Durchgangsloch (210) beabstandet ist, und ein zweites Verschlusselement (400) aufweist, das konfiguriert ist, in das dritte Durchgangsloch (220) eingesetzt zu werden.

5. Zwischenmodul-Sammelschiene nach Anspruch 4, wobei das zweite Verschlusselement (400) ein thermoplastisches Material aufweist.

6. Zwischenmodul-Sammelschiene nach Anspruch 5, wobei das thermoplastische Material mindestens eines aufweist, das aus einer Gruppe ausgewählt ist, die aus Silikon, Polyethylen, Polypropylen, Polystyrol und Polyvinylchlorid besteht.

7. Zwischenmodul-Sammelschiene nach Anspruch 1, wobei die Metallplatte (100) eine obere Metallplatte (100) und eine untere Metallplatte (100) aufweist, die in einer horizontalen Richtung geschnitten sind.

8. Zwischenmodul-Sammelschiene nach Anspruch 1, wobei eine Länge des ersten Verschlusselements (300) weniger als die Hälfte einer Länge des ersten Durchgangslochs (110) beträgt.

9. Zwischenmodul-Sammelschiene nach Anspruch 8, wobei das erste Verschlusselement (300) konfiguriert ist, zu zwei oder mehr in das erste Durchgangsloch (110) eingesetzt zu werden.

10. Zwischenmodul-Sammelschiene nach Anspruch 1, wobei das Abdeckelement (200) mindestens eines aufweist, das aus einer Gruppe ausgewählt ist, die aus hochwärmebeständigem Silikonpolyphenylensulfid, Polyetheretherketon, Polyphthalamid, Polyamid, Polysulfon, Polyethersulfon, Polyetherimid, Acrylfaser und Polybenzimidazol besteht.

11. Batteriepack aufweisend die Zwischenmodul-Sammelschiene nach einem der Ansprüche 1 bis 10.

## Revendications

1. Barre omnibus inter-module comprenant :
une plaque métallique (100) pour une connexion électrique ; et
un élément de recouvrement (200) configuré pour couvrir partiellement la plaque métallique (100),
dans laquelle la plaque métallique (100) a au moins un premier trou traversant (110) y étant formé dans une direction longitudinale, et
dans laquelle un premier élément de fermeture (300) est configuré pour être introduit dans le premier trou traversant (110) de la plaque métallique (100).

2. Barre omnibus inter-module selon la revendication 1, dans laquelle le premier élément de fermeture (300) inclut un matériau thermoplastique.

3. Barre omnibus inter-module selon la revendication 2, dans laquelle le matériau thermoplastique comprend un ou plusieurs matériaux sélectionnés dans un groupe constitué de silicone, polyéthylène, polypropylène, polystyrène et chlorure de polyvinyle.

4. Barre omnibus inter-module selon la revendication 1, dans laquelle l'élément de recouvrement (200) inclut un deuxième trou traversant (210), la plaque métallique (100) étant configurée pour être introduite dans le deuxième trou traversant (210) dans la direction longitudinale, et au moins un troisième trou traversant (220) écarté du deuxième trou traversant (210), et un deuxième élément de fermeture (400) étant configuré pour être introduit dans le troisième trou traversant (220).

5. Barre omnibus inter-module selon la revendication 4, dans laquelle le deuxième élément de fermeture (400) inclut un matériau thermoplastique.

6. Barre omnibus inter-module selon la revendication 5, dans laquelle le matériau thermoplastique comprend un ou plusieurs matériaux sélectionnés dans un groupe constitué de silicone, polyéthylène, polypropylène, polystyrène et chlorure de polyvinyle.

7. Barre omnibus inter-module selon la revendication 1, dans laquelle la plaque métallique (100) inclut une plaque métallique supérieure (100) et une plaque métallique inférieure (100) coupées dans une direction horizontale.

8. Barre omnibus inter-module selon la revendication 1, dans laquelle une longueur du premier élément de fermeture (300) est moins de la moitié d'une longueur du premier trou traversant (110).

9. Barre omnibus inter-module selon la revendication 8, dans laquelle le premier élément de fermeture (300) est configuré pour être introduit dans le premier trou traversant (110) dans deux ou plus.

10. Barre omnibus inter-module selon la revendication 1, dans laquelle l'élément de recouvrement (200) comprend un ou plusieurs matériaux sélectionnés dans un groupe constitué de sulfure de polyphénylène de silicone hautement résistant à la chaleur, polyétheréthercétone, polyphtalamide, polyamide, polysulfone, polyéthersulfone, polyétherimide, fibre acrylique et polybenzimidazole.

11. Bloc-batterie comprenant la barre omnibus inter-module selon l'une quelconque des revendications 1 à 10.
